# FASCICULE DE BREVET EUROPEEN

(11) **EP 1 263 876 B1**
(45) Date de publication et mention de la délivrance du brevet: **12.01.2005**
(21) Numéro de dépôt: 01907774.2
(22) Date de dépôt: 13.02.2001
(51) Int. Cl.: C08L 23/28, C08L 23/22

(54) **CONDUITES CONTENANT MATERIAU POUR L'ISOLATION THERMIQUE**
LEITUNGEN MIT THERMISCHER ISOLATION
PIPES CONTAINING HEAT INSULATING MATERIAL

(30) Priorité: 15.02.2000 FR 0001822; 30.05.2000 FR 0006896
(43) Date de publication de la demande: 11.12.2002
(73) Titulaire: HUTCHINSON, 75008 Paris (FR)
(72) Inventeur: SIMON, Jean-Michel, F-92320 Chatillon (FR); GAROIS, Nicolas, F-45200 Amilly (FR)
(74) Mandataire: Corizzi, Valérie
(86) Numéro de dépôt international: PCT/FR2001/000409
(87) Numéro de publication internationale: WO 2001/060910

(56) Documents cités:
- EP-A- 0 428 158
- EP-A- 0 969 039
- DE-A- 2 408 152
- DATABASE WPI Derwent Publications Ltd., London, GB; AN 1991-003966 XP002150886 & JP 02 281504 A (NITTO DENKO), 19 novembre 1990 (1990-11-19)

## Description

La présente invention se rapporte à l'utilisation d'un matériau à base d'un élastomère réticulable et d'un élastomère non réticulable de faible conductivité thermique, pour réaliser une isolation thermique, et notamment l'isolation thermique de conduites, en particulier de conduites pétrolières sous-marines. ainsi qu'à des conduites qui comprennent au moins une couche de ce matériau.

L'extraction du pétrole dans les fonds sous-marins nécessite l'utilisation de conduites métalliques, notamment pour amener le pétrole de l'emplacement de forage jusqu'au lieu où il est récupéré et éventuellement stocké.

Lors du forage, le pétrole est extrait à une température de 70 à 120°C. Au cours de son transport jusqu'à la surface, il est refroidi par l'eau de mer environnante. Or, il est indispensable que la température du pétrole extrait soit maintenue à une valeur supérieure à 50°C environ, de façon à éviter qu'il ne devienne trop visqueux et qu'il ne se fige dans les conduites.

Pour leur isolation thermique, les conduites actuelles sont constituées de deux tuyaux métalliques coaxiaux, entre lesquels est intercalée une mousse rigide, classiquement de polyuréthanne, ou un matériau de type syntactique, à savoir un matériau rigide tel que le polyuréthanne dans lequel sont incorporées des microsphères de verre creuses.

Ces conduites présentent néanmoins l'inconvénient de ne pas pouvoir être utilisées au-delà de 200 à 300 mètres de profondeur, c'est-à-dire à une pression supérieure à 200 à 300 bars, pression au-delà de laquelle ni la mousse rigide, ni le matériau de type syntactique n'offrent une résistance mécanique suffisante.

Il a également été proposé de disposer autour des conduites de transport du pétrole des systèmes de chauffage consistant en des canalisations d'eau et de gaz. De tels systèmes sont néanmoins trop complexes et coûteux pour être satisfaisants d'un point de vue industriel.

Les Inventeurs se sont donc donné pour but de pourvoir à un matériau à faible conductivité thermique, apte à assurer une isolation thermique, et notamment l'isolation thermique de conduites pétrolières sous-marines, qui pallie les inconvénients des systèmes d'isolation thermique proposés jusqu'à ce jour et qui puisse être utilisé jusqu'à des profondeurs de 3000 mètres.

On connaît, par la Demande de Brevet Allemand n° 2 408 152 et par la Demande de Brevet Japonais n° 2-281504, des matériaux qui comprennent un caoutchouc butyle associé à un polyisobutylène. Selon DE-A-2 408 152, une telle association conduit à un matériau qui est caractérisé par une capacité de dissipation mécanique élevée et qui permet d'amortir les vibrations et le bruit et d'améliorer le frottement. Dans JP-A-2-281504, le matériau est proposé sous forme de bandes ou de feuilles enroulées pour isoler des câbles électriques à haute tension.

Ces matériaux ne sont en aucun cas décrits comme susceptibles d'assurer une isolation thermique.

La présente invention a pour objet un l'utilisation d'un matériau comprenant au moins un élastomère réticulable sélectionné dans le groupe constitué par le caoutchouc butyle, les halobutyles et les copolymères bromés d'isobutylène et de para-méthylstyrène, et au moins un élastomère non réticulable de faible conductivité thermique, pour réaliser une isolation thermique.

Au sens de la présente invention et dans ce qui suit, on entend par « faible conductivité thermique », une conductivité thermique inférieure ou égale à 0,140 W.m⁻¹.K⁻¹, cette dernière étant mesurée à l'aide d'un appareil de marque ANTER selon la norme ASTM E 1530.

On entend par « halobutyles », aussi bien les chlorobutyles que les bromobutyles, tels que les chlorobutyle 1066 et bromobutyle X2 commercialisés par la société EXXON.

A titre d'exemples de caoutchouc butyle et de copolymères bromés d'isobutylène et de para-méthylstyrène utilisables selon la présente invention, on peut citer respectivement le butyle 365 commercialisé par BAYER et l'EXXPRO® 90-10 commercialisé par la société EXXON.

Les conductivités thermiques des élastomères exemplifiés ci-dessus sont de l'ordre de 0,118 (pour l'EXXPRO® 90-10) à 0,125 W.m⁻¹.K⁻¹.

Avantageusement, ledit élastomère non réticulable de faible conductivité thermique présent dans le matériau est un polyisobutylène. On peut citer par exemple les VISTANEX® MML 80 et 120 commercialisés par la société EXXON et dont les conductivités thermiques sont respectivement de 0,122 et de 0,125 W.m⁻¹.K⁻¹.

Selon une disposition avantageuse de l'invention, le matériau comprend, de plus. au moins un thermoplastique de faible conductivité thermique, choisi parmi les thermoplastiques fluorés et les thermoplastiques polyoléfiniques, et au moins un thermodurcissable de faible conductivité thermique.

Ledit thermoplastique polyoléfinique consiste. par exemple, en un polypropylène, tandis que ledit thermoplastique fluoré est avantageusement un terpolymère de tétrafluoroéthylène, d'hexafluoropropylène et de fluorure de vinylidène, couramment dénommé THV et commercialisé, par exemple, sous les dénominations DYNEON® 400 et DYNEON® 500 par la société 3M. Sa conductivité thermique est de l'ordre de 0,140 W. m⁻¹.K⁻¹.

Par ailleurs, ledit thermodurcissable de faible conductivité thermique est avantageusement un polyimide, tel que les polyimides VESPEL® et CAPTON® commercialisés respectivement par les sociétés DU PONT DE NEMOURS et 3M, et dont les conductivités thermiques sont de l'ordre de 0.120 W.m⁻¹.K⁻¹.

Il est bien entendu que le matériau utilisé conformément à la présente invention peut également comprendre, comme cela est connu en rapport avec toute formulation à base d'élastomères, un système de réticulation approprié et différents additifs classiquement employés dans l'industrie des polymères, tels que des activateurs (oxyde de zinc actif par exemple), des agents complexants (par exemple l'acide stéarique), des plastifiants (par exemple une huile naphténique ou paraffinique), des lubrifiants (par exemple un polyéthylène glycol). des agents de mise en oeuvre (tel que le CRODAMIDE® ER commercialisé par la société CRODA), ou encore des agents compatibilisants comme un SEBS modifié par de l'anhydride maléique ou non.

De l'oxyde d'antimoine peut également être introduit en faible quantité, en tant que charge non renforçante, pour une meilleure processabilité du matériau et ce. sans influencer sa conductivité thermique. Cette charge est avantageusement introduite à hauteur de 50 parts en poids au maximum et, de préférence, à hauteur de 20 parts en poids.

Quant au système de réticulation sus-mentionné. il peut s'agir de tout système connu dans l'industrie des polymères, tel qu'un système de réticulation par les peroxydes organiques, par les oxydes métalliques (oxyde de zinc actif + DHT 4A2 + ZBEC par exemple), par les résines phénoliques (bromées ou non comme celles commercialisées par la société SCHENECTADY sous les références SP1045 ou SP1055) ou encore par des donneurs de soufre, de préférence ne générant pas de nitrosamine (RENOCURE® SG + DEOVULC® BG 187 ou SULFADON® CLD + DEOVULC® BG 187). Parmi ces systèmes de réticulation, les résines phénoliques se sont révélées convenir particulièrement bien à la réalisation du matériau, car elles permettent d'obtenir des propriétés mécaniques très satisfaisantes.

Selon une autre disposition avantageuse de l'invention, le matériau comprend :
- entre 30 et 120 parts en poids dudit élastomère réticulable,
- entre 20 et 100 pans en poids dudit élastomère non réticulable,
- entre 0 et 100 parts en poids, de préférence entre 20 et 100 parts, dudit thermoplastique, et
- entre 0 et 100 parts en poids dudit thermodurcissable.

De façon particulièrement avantageuse, le matériau utilisé conformément à l'invention présente une conductivité thermique inférieure ou égale à 0.140 W.m⁻¹.K⁻¹, de préférence inférieure ou égale à 0.130 W.m⁻¹.K⁻¹.

Le matériau utilisé conformément à l'invention présente les avantages d'être souple, de par la présence de composés de nature élastomérique, et de présenter une conductivité thermique particulièrement faible, comme indiqué ci-dessus.

De façon surprenante, il peut être fabriqué et mis en oeuvre en l'absence de charges, renforçantes ou non, telles que le noir de carbone, la silice, la craie et le kaolin, charges qui sont classiquement utilisées dans l'industrie des polymères et qui augmentent la conductivité thermique des matériaux.

En outre, ce matériau est compact, c'est-à-dire de nature non cellulaire, ce qui lui confère une excellente résistance à la pression, caractéristique particulièrement avantageuse pour son utilisation à des grandes profondeurs sous-marines, comme cela sera décrit plus en détail dans ce qui suit.

Selon encore une autre disposition avantaguse de l'invention, le matériau comprend, en outre. des microsphères de verre creuses, par exemple les microsphères de verre de grade 38/4000 commercialisées par la société 3M.

La présence de ces microsphères de verre creuses permet d'abaisser la densité du matériau d'environ 0,98 (en leur absence) à environ 0,65, baisse de densité qui est particulièrement avantageuse pour sa flottabilité. Ces microsphères de verre contribuent également à une baisse de la conductivité thermique du matériau selon la présente invention, baisse d'autant plus marquée que le pourcentage volumique en microsphères de verre est plus élevé, pourcentage qui peut atteindre 60% en volume. On peut ainsi obtenir des matériaux dont la conductivité thermique est de l'ordre de 0,09 W.m⁻¹.K⁻¹.

L'incorporation des microsphères de verre creuses dans le matériau peut être effectuée à l'aide d'une extrudeuse bi-vis, dont un premier compartiment comprend lesdites microsphères et un second compartiment comprend soit l'ensemble des ingrédients du matériau préalablement mélangés, dans le cas d'un procédé de fabrication du matériau comme un caoutchouc traditionnel, soit l'ensemble des ingrédients du matériau préalablement réticulés dynamiquement (à savoir simultanément soumis à un malaxage et à des paliers de températures croissantes), dans le cas où le matériau est fabriqué comme un thermoplastique élastomère (ce qui est notamment le cas lorsque le matériau comprend un thermoplastique).

Des silanes peuvent également être utilisés dans le but d'assurer une meilleure liaison entre les microsphères de verre et les élastomères présents dans le matériau.

Selon une disposition préférée de l'invention. le matériau est utilisé pour l'isolation thermique de conduites.

Au sens de la présente invention, on entend par « conduite », tout tube, tuyau, tubulure ou analogue pour l'acheminement de fluides.

Une utilisation particulièrement avantageuse du matériau d'isolation thermique selon la présente invention est l'isolation de conduites pétrolières sous-marines, notamment de conduites sous-marines grande profondeur, par exemple à 2000-3000 mètres de profondeur.

La présente invention a, en outre. pour objet une conduite, caractérisée en ce qu'elle comprend au moins une couche d'un matériau d'isolation thermique tel que décrit précédemment.

De telles conduites comprennent par exemple un tube métallique enrobé, sur sa face externe, d'une couche du matériau selon l'invention, avantageusement d'une épaisseur de 20 à 40 mm.

Les conduites selon l'invention peuvent. de façon particulièrement avantageuse, être utilisées à des profondeurs de 2000 à 3000 mètres sans être déformées aux pressions de 200 à 300 bars qui y règnent, contrairement aux conduites existant à l'heure actuelle, permettant ainsi le forage de nappes pétrolières jusqu'ici inaccessibles.

Outre les dispositions qui précèdent, l'invention comprend encore d'autres dispositions qui ressortiront de la description qui va suivre, qui se réfère à des exemples de formulations de matériaux aptes à être utilisés pour l'isolation thermique, notamment de conduites pétrolières sous-marines grande profondeur, et de mesures de leur conductivité thermique.

### EXEMPLE 1 : Formulation, préparation et conductivité thermique d'un premier matériau pour l'isolation thermique

Les composés utilisés et leurs quantités, exprimées en parts en poids, sont résumés ci-dessous :

| | |
|---|---|
| Caoutchouc butyle 365 (BAYER) | 30 |
| VISTANEX® MML 120 (EXXON) | 70 |
| Huile naphténique | 10 |
| Oxyde de zinc actif (HB Chemical) | 5 |
| Acide stéarique | 1 |
| Résine phénolique SP1055 (SCHENECTADY) | 10 |

Il s'agit donc d'un matériau à base d'un élastomère réticulable (le caoutchouc butyle) et d'un élastomère non réticulable de faible conductivité thermique (le VISTANEX® MML 120).

Le matériau est élaboré comme un caoutchouc traditionnel : l'ensemble des composés est d'abord placé dans un mélangeur, puis une étape de mélangeage est réalisée conformément aux techniques connues de l'Homme du métier en rapport avec les caoutchoucs. Après une étape de mise en forme du matériau, ce dernier est vulcanisé à l'aide d'une presse à compression pendant 15 minutes et à 180°C.

La conductivité thermique du matériau ainsi obtenu est de 0,112 W.m⁻¹.K⁻¹.

### EXEMPLE 2 : Formulation, préparation et conductivité thermique d'un deuxième matériau pour l'isolation thermique.

Les composés utilisés et leurs quantités, exprimées en parts en poids, sont résumés ci-dessous :

| | |
|---|---|
| EXXPRO® 90-10 | 60 |
| VISTANEX® MML 80 | 20 |
| DYNEON® 400 | 20 |
| Huile naphténique | 10 |
| Polyéthylène glycol 4000 | 2 |
| CRODAMIDE® ER | 0,5 |
| Oxyde de zinc actif (HB Chemical) | 1,5 |
| DHT 4A2 | 2 |
| ZBEC | 1,5 |

Il s'agit donc d'un matériau à base d'un élastomère réticulable (EXXPRO® 90-10), d'un élastomère non réticulable de faible conductivité thermique (VISTANEX® MML 80) et d'un thermoplastique fluoré de faible conductivité thermique (DYNEON® 400).

Le ZBEC correspond à du dibenzyldithiocarbamate de zinc ; cet accélérateur est commercialisé par la société SAFIC-ALCAN. Quant au DHT 4A2, il correspond à un mélange d'oxydes d'aluminium et de magnésium commercialisé par MITSUI & Co. et sert également d'accélérateur pour la réticulation.

Eu égard à la présence du thermoplastique fluoré, le matériau est élaboré de la même façon qu'un thermoplastique élastomère, c'est-à-dire avec une réticulation dynamique lors du mélangeage de l'ensemble des ingrédients.

Les composés énumérés ci-dessus sont donc placés dans un mélangeur dont la température est initialement régulée à 150°C, la vitesse des rotors étant de 95 tours/minute et la pression du piston étant de 3,5 bars. La température du mélange est progressivement augmentée selon le protocole suivant : à 1 minute, 135°C ; à 4 minutes, 210°C ; à 6 minutes, 215°C ; à 12 minutes, 230°C. Le mélange est alors refroidi en diminuant la vitesse des rotors et, lorsque sa température est d'environ 180°C, il est soumis à un calandrage pour obtenir une feuille de 5 à 10 mm d'épaisseur qui est ensuite broyée. Le broyat est à nouveau mélangé sur une extrudeuse bi-vis et extrudé en sortie de filière sous la forme de granulés, granulés qui pourront ensuite être mis en forme conformément aux souhaits de l'utilisateur.

La conductivité thermique du matériau ainsi obtenu est de 0,125 W.m⁻¹.K⁻¹.

### EXEMPLE 3 : Formulation, préparation et conductivité thermique d'un troisième matériau pour l'isolation thermique

Les composés utilisés et leurs quantités, exprimées en parts en poids, sont résumés ci-dessous :

| | |
|---|---|
| EXXPRO® 90-10 | 100 |
| VISTANEX® MML 80 | 50 |
| Huile naphténique | 5 |
| Polyéthylène glycol 4000 | 2,5 |
| CRODAMIDE® ER | 0,6 |
| Oxyde de zinc actif (HB Chemical) | 2 |
| RENOCURE® SG | 3 |
| DEOVULC® BG 187 | 2 |

Il s'agit donc d'un matériau à base d'un élastomère réticulable (EXXPRO® 90-10) et d'un élastomère non réticulable de faible conductivité thermique (VISTANEX® MML 80).

Ce matériau est également élaboré avec une réticulation dynamique lors du mélangeage de l'ensemble des ingrédients, selon un protocole opératoire similaire à celui décrit dans l'exemple 2.

Les composés énumérés ci-dessus sont donc placés dans un mélangeur dont la température est initialement régulée à 80°C, la vitesse des rotors étant de 100 tours/minute. Lorsque la température du mélange atteint 200-230°C, le mélange est refroidi en diminuant la vitesse des rotors et, lorsque sa température est d'environ 180°C, il est soumis à un calandrage pour obtenir une feuille de 5 à 10 mm d'épaisseur. Cette feuille est broyée et le broyat est à nouveau mélangé sur une extrudeuse bi-vis et extrudé en sortie de filière sous la forme de granulés.

La conductivité thermique du matériau ainsi obtenu est de 0,130 W.m⁻¹.K⁻¹.

## Revendications

1. Utilisation d'un matériau comprenant au moins un élastomère réticulable sélectionné dans le groupe constitué par le caoutchouc butyle, les halobutyles et les copolymères bromés d'isobutylène et de para-méthylstyrène, et au moins un élastomère non l'éticulable de faible conductivité thermique, pour réaliser une isolation thermique.

2. Utilisation selon la revendication 1, dans laquelle ledit élastomère non réticulable de faible conductivité thermique est un polyisobutylène.

3. Utilisation selon la revendication 1 ou la revendication 2, dans laquelle le matériau comprend de plus au moins un thermoplastique de faible conductivité thermique choisi parmi les thermoplastiques fluorés et les thermoplastiques polyoléfiniques, et au moins un thermodurcissable de faible conductivité thermique.

4. Utilisation selon la revendication 3, dans laquelle ledit thermoplastique fluoré est un terpolymère de tétrafluoroéthylène, d'hexafluoropropylène et de fluorure de vinylidène.

5. Utilisation selon la revendication 3, dans laquelle ledit thermoplastique polyoléfinique est un polypropylène.

6. Utilisation selon la revendication 3, dans laquelle ledit thermodurcissable de faible conductivité thermique est un polyimide.

7. Utilisation selon l'une quelconque des revendications précédentes, dans laquelle le matériau comprend :
- entre 30 et 120 parts en poids dudit élastomère réticulable,
- entre 20 et 100 parts en poids dudit élastomère non réticulable,
- entre 0 et 100 parts en poids dudit thermoplastique, et
- entre 0 et 100 pans en poids dudit thermodurcissable.

8. Utilisation selon l'une quelconque des revendications précédentes, dans laquelle le matériau présente une conductivité thermique inférieure ou égale à 0,140 W.m⁻¹.K⁻¹, de préférence inférieure ou égale à 0,130 W.m⁻¹.K⁻¹.

9. Utilisation selon l'une quelconque des revendications précédentes, dans laquelle le matériau comprend en outre des microsphères de verre creuses.

10. Utilisation selon l'une quelconque des revendications précédentes pour réaliser l'isolation thermique d'une conduite.

11. Utilisation selon la revendication 10, dans laquelle la dite conduite est une conduite pétrolière sous-marine grande profondeur.

12. Conduite, **caractérisée en ce qu'**elle comprend au moins une couche d'un matériau d'isolation thermique tel que défini dans l'une quelconque des revendications 1 à 9.

13. Conduite, **caractérisée en ce qu'**elle est une conduite pétrolière sous-marine grande profondeur.

## Patentansprüche

1. Verwendung eines Werkstoffes, der mindestens ein vernetzbares Elastomer, das aus der aus Butylgummi, Halogenbutylen und bromierten Copolymeren von Isobutylen und para-Methylstyrol bestehenden Gruppe ausgewählt ist, sowie mindestens ein nicht-vernetzbares Elastomer mit geringer Wärmeleitfähigkeit umfaßt, zum Erstellen einer Wärmedämmung.

2. Verwendung nach Anspruch 1, wobei das nicht-vernetzbare Elastomer mit geringer Wärmeleitfähigkeit ein Polyisobutylen ist.

3. Verwendung nach Anspruch 1 oder Anspruch 2, wobei der Werkstoff ferner mindestens einen unter den fluorierten Thermoplasten und den polyolefinischen Thermoplasten ausgewählten Thermoplasten mit geringer Wärmeleitfähigkeit sowie mindestens ein wärmeaushärtendes Material mit geringer Wärmeleitfähigkeit umfaßt.

4. Verwendung nach Anspruch 3, wobei der fluorierte Thermoplast ein Terpolymer von Tetrafluorethylen, Hexafluorpropylen und Vinylidenfluorid ist.

5. Verwendung nach Anspruch 3, wobei der polyolefinische Thermoplast ein Polypropylen ist.

6. Verwendung nach Anspruch 3, wobei das wärmeaushärtende Material ein Polyimid ist.

7. Verwendung nach einem der vorhergehenden Ansprüche, wobei der Werkstoff umfaßt:
- zwischen 30 und 120 Gewichtsteile des vernetzbaren Elastomers,
- zwischen 20 und 100 Gewichtsteile des nichtvernetzbaren Elastomers,
- zwischen 0 und 100 Gewichtsteile des Thermoplasten,
- zwischen 0 und 100 Gewichtsteile des wärmeaushärtenden Materials.

8. Verwendung nach einem der vorhergehenden Ansprüche, wobei der Werkstoff eine Wärmeleitfähigkeit von weniger als oder gleich 0,140 W.m⁻¹.K⁻¹, bevorzugt weniger als oder gleich 0,130 W.m⁻¹.K⁻¹ besitzt.

9. Verwendung nach einem der vorhergehenden Ansprüche, wobei der Werkstoff ferner hohle Glas-Mikrokügelchen umfaßt.

10. Verwendung nach einem der vorhergehenden Ansprüche zum Erstellen der Wärmedämmung einer Rohrleitung.

11. Verwendung nach Anspruch 10, wobei die Rohrleitung eine Tiefsee-Erdölpipeline ist.

12. Rohrleitung, **dadurch gekennzeichnet, daß** sie mindestens eine Schicht aus einem wärmedämmenden Werkstoff gemäß der Definition in einem der Ansprüche 1 bis 9 aufweist.

13. Rohrleitung, **dadurch gekennzeichnet, daß** sie eine Tiefsee-Erdölpipeline ist.

## Claims

1. Use of a material comprising at least one cross-linkable elastomer selected from the group consisting of butyl rubber, halobutyls and brominated isobutylene and para-methyl styrene copolymers, and at least one non-cross-linkable elastomer with a low thermal conductivity as a means of providing thermal heat insulation.

2. Use as claimed in claim I, whereby said non-cross-linkable elastomer with a low thermal conductivity is a polyisobutylene.

3. Use as claimed in claim 1 or claim 2, in which the material additionally comprises at least one thermoplastic material with a low thermal conductivity selected from fluorinated thermoplastic materials and polyolefin-based thermoplastic materials, and at least one thermosetting material with a low thermal conductivity.

4. Use as claimed in claim 3, in which said fluorinated thermoplastic material is a terpolymer of tetrafluoro-ethylene, hexafluoro-propylene and vinylidene fluoride.

5. Use as claimed in claim 3, in which said polyolefin-based thermoplastic material is a polypropylene.

6. Use as claimed in claim 3, in which said thermosetting material with a low thermal conductivity is a polyimide.

7. Use as claimed in any one of the preceding claims, in which the material comprises:
- between 30 and 120 parts by weight of said cross-linkable elastomer,
- between 20 and 100 parts by weight of said non-cross-linkable elastomer,
- between 0 and 100 parts by weight of said thermoplastic material and
- between 0 and 100 parts by weight of said thermosetting material.

8. Use as claimed in any one of the preceding claims, in which the material has a thermal conductivity of less than or equal to 0.140 W.m⁻¹.K⁻¹, preferably less than or equal to 0.130 W.m⁻¹.K⁻¹.

9. Use as claimed in any one of the preceding claims, in which the material additionally contains hollow glass micro-spheres.

10. Use as claimed in any one of the preceding claims as a thermal insulation for a pipe.

11. Use as claimed in claim 10, in which said pipe is a deep-sea offshore oil pipe.

12. Pipe, **characterised in that** it comprises at least one layer of a thermal insulating material as defined in any one of claims 1 to 9.

13. Pipe, **characterised in that** it is a deep-sea offshore oil pipe.
